# DEMANDE DE BREVET EUROPEEN

(11) **EP 0 896 394 A1**
(43) Date de publication de la demande: **10.02.1999**
(21) Numéro de dépôt: 98401938.0
(22) Date de dépôt: 29.07.1998
(51) Int. Cl.: H01R 13/56, H01R 13/58

(54) **Capot pour connecteur électrique ou optique**

(30) Priorité: 08.08.1997 FR 9710202
(71) Demandeur: Amphenol Socapex, 74311 Thyez Cedex (FR)
(72) Inventeur: Huguenet, Jean-Pierre, 39290 Biarne (FR)
(74) Mandataire: Dronne, Guy

(57) **Abrégé**

L'invention concerne un capot pour connecteur électrique ou optique comprenant deux demi-coquilles solidarisables entre elles et définissant une chambre interne, une première extrémité pour le passage d'un câble électrique ou optique et une deuxième extrémité de fixation sur le connecteur électrique ou optique.

A proximité de sa première extrémité (16), la face interne de la demi-coquille (12, 14) comporte une portion en forme de calotte sphérique (26, 28) concave (26,28), les deux calottes sphériques, lorsque les demi-coquilles sont assemblées, étant sensiblement en regard l'une de l'autre et étant disposées sensiblement sur une même sphère, et en ce qu'il comprend en outre un organe mobile (30) de passage muni d'un passage axial (36) pour le câble, ledit organe mobile comportant une première partie en forme de portion de sphère (32) et une deuxième partie de forme allongée (34), lorsque les deux demi-coquilles sont assemblées, ladite partie en forme de portion de sphère coopérant avec les calottes sphériques et la partie de forme cylindrique de l'organe mobile étant disposée à l'intérieur de ladite chambre.

## Description

La présente invention a pour objet un capot pour connecteur électrique ou optique.

Par capot pour connecteur électrique ou optique, il faut comprendre un boîtier qui est fixé à la partie postérieure du connecteur proprement dit et dont la fonction est d'une part d'entourer et de protéger les extrémités des conducteurs électriques ou optiques du câble dans leurs zones de raccordement aux bornes du connecteur électrique et d'autre part d'orienter le câble électrique ou optique aboutissant au connecteur et donc au boîtier.

Le plus souvent, le capot présente un passage pour le câble électrique qui est axial. Dans certains cas, le capot est conformé pour que la sortie du câble soit disposée à angle droit par rapport à l'axe longitudinal du capot et du connecteur électrique ou optique.

En d'autres termes, quelque soit le type de capot pour connecteur considéré, la direction du câble raccordé au connecteur est imposée. Elle est soit axiale soit orthogonale.

Or, il existe un grand nombre de situations dans lesquelles il serait nécessaire de donner une orientation particulière au câble électrique ou optique à la sortie du connecteur en fonction des conditions d'environnement et de disponibilité de place dans lesquelles le connecteur est monté. Il est en particulier très important d'orienter convenablement ce câble afin d'éviter l'introduction de contraintes liées à une courbure trop importante du câble.

Un objet de la présente invention est de fournir un capot pour connecteur électrique ou optique qui permette au moment du câblage du câble sur le connecteur de donner à la sortie du câble une direction convenable.

Pour atteindre ce but, selon l'invention, le capot pour connecteur électrique ou optique comprenant deux demi-coquilles solidarisables entre elles ct définissant une chambre interne, une première extrémité pour le passage d'un câble et une deuxième extrémité de fixation sur le connecteur électrique ou optique, se caractérise en ce que, à proximité de sa première extrémité, la face interne de la demi-coquille comporte une portion en forme de calotte sphérique concave, les deux calottes sphériques, lorsque les demi-coquilles sont assemblées, étant sensiblement en regard l'une de l'autre et étant disposées sensiblement sur une même sphère, et en ce qu'il comprend en outre un organe mobile de passage muni d'un passage axial pour le câble, ledit organe mobile comportant une première partie en forme de portion de sphère et une deuxième partie de forme allongée, lorsque les deux demi-coquilles sont assemblées, ladite partie en forme de portion de sphère coopérant avec les calottes sphériques et la partie de forme allongée de l'organe mobile étant disposée à l'intérieur de ladite chambre.

On comprend que la portion sphérique de l'organe mobile qui est traversé par le câble constitue avec les deux surfaces en forme de portions de calottes sphériques ménagées dans les deux demi-coquilles du capot un système à rotule qui permet de donner au câble l'orientation souhaitée à la sortie de ce capot.

La partie de forme allongée qui peut avoir une section droite circulaire, avec méplats, ou une section droite hexagonale, peut servir à la reprise de blindage du câble électrique ou à la fixation du câble.

Selon un mode préféré de réalisation, lorsque les deux demi-coquilles sont assemblées, le contact entre la partie sphérique de l'organe mobile et les surfaces réalisent un contact serré de telle manière que l'organe mobile conserve une orientation déterminée.

On comprend en effet qu'après avoir réalisé le câblage des différents conducteurs électriques ou optiques du câble sur le connecteur, on peut donner à l'organe mobile une orientation voulue et cette orientation est maintenue par frottement après l'assemblage des deux demi-coquilles constituant le capot.

D'autres caractéristiques et avantages de l'invention apparaîtront mieux à la lecture de la description qui suit de plusieurs modes de réalisation de l'invention donnés à titre d'exemples non limitatifs. La description se réfère aux figures annexées, sur lesquelles :
la figure 1 est une vue simplifiée en coupe verticale illustrant le principe de réalisation du capot ;
la figure 2 est une vue de principe de dessus montrant la mise en place de l'organe mobile dans la demi-coquille inférieure ; et
la figure 3 est une vue en perspective d'un mode préféré de réalisation d'une demi-coquille du capot.

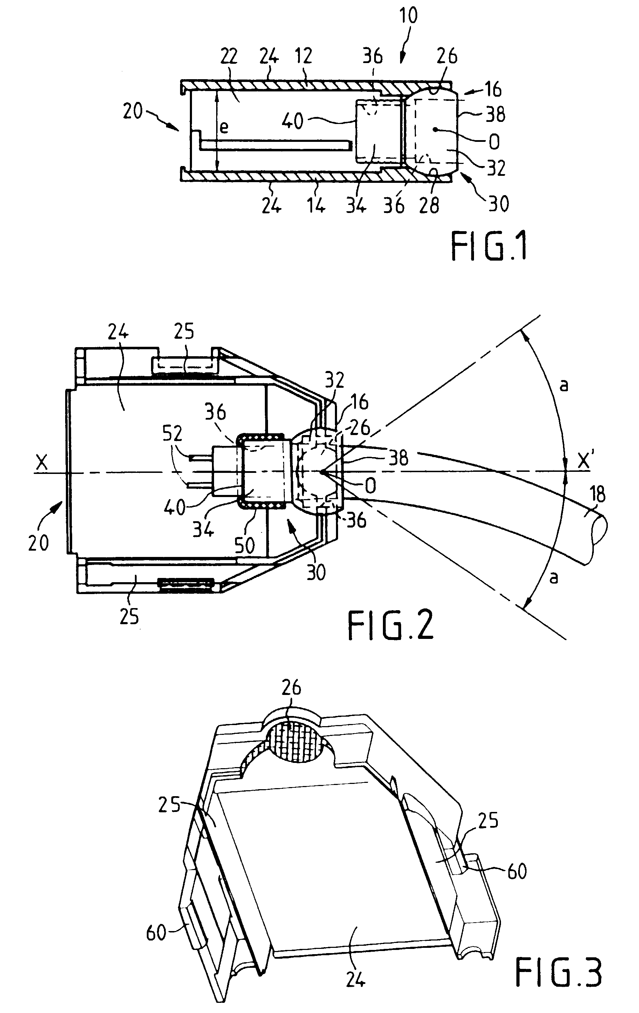

En se référant tout d'abord aux figures 1 et 2, on va décrire le principe du capot pour connecteur électrique ou optique selon l'invention.

On va d'abord décrire l'invention dans le cas particulier d'un connecteur électrique.

Le capot 10 est constitué par deux demi-coquilles 12 et 14 destinées à être assemblées l'une avec l'autre après la réalisation des connexions entre les conducteurs du câble et le connecteur électrique. Les demi-coquilles 12 et 14 comportent une première extrémité 16 pour permettre le passage du câble électrique 18 et une deuxième extrémité 20 de fixation sur le connccteur électrique proprement dit. Lorsque les deux demi-coquilles 12 et 14 sont assemblées, elles définissent une chambre 22 dans laquelle se trouveront enfermés les conducteurs du câble reliés aux bornes du connecteur électrique. Chaque demi-coquille comporte un fond 24 sensiblement plan et un rebord 25, les rebords 25 étant destinés à être assemblés entre eux. A proximité de l'extrémité 16 de sortie du câble 18, le fond de chaque demi-coquille est réalisé pour présenter une portion de surface en forme de calotte sphérique, ces portions de surface étant respectivement référencées 26 et 28. Lorsque les deux demi-coquilles 12 et 14 sont assemblées, les calottes sphériques concaves 26 et 28 sont en regard l'une de l'autre et sont sensiblement disposées sur une même surface sphérique de centre O.

Le capot comporte également un organe mobile 30 pour permettre le passage du câble 18 et son orientation à la sortie du capot 10. L'organe mobile 30 est constitué par une portion en forme de portion de sphère 32 et une portion de forme allongée 34. L'ensemble de l'organe mobile 30 est traversé par un orifice axial 36 dont le diamètre est légèrement supérieur à celui du câble électrique 18, ce passage 36 débouchant aux deux extrémités 38 et 40 de l'organe mobile 30. Comme on le voit sur les figures, l'organe mobile 30 est monté entre les deux demi-coquilles de telle manière que sa portion cylindrique 34 soit à l'intérieur de la chambre 22 limitée par les deux demi-coquilles. La portion allongée 34 peut avoir une section droite circulaire avec méplats ou une section droite hexagonale.

Les demi-coquilles 12 et 14 ainsi que l'organe mobile 30 sont réalisés en un matériau conducteur par exemple celui qui est commercialisé sous la marque Zamak. Lorsque les deux demi-coquilles sont assemblées, le contact entre la portion sphérique 32 de l'organe mobile et les calottes sphériques 26 et 28 est serré de telle manière que l'organe mobile conserve l'orientation qui lui a été donnée par rapport à l'axe longitudinal XX' du capot, en restant dans le plan de joint des demi-coquilles.

Comme le montre mieux la figure 2, la portion allongée 34 de l'organe mobile 30 sert à la reprise du blindage du câble 18. Sur cette figure, on a montré le blindage 50 qui est fixé sur la face externe de la pièce allongée 34. On a montré également les différents conducteurs électriques 52 constituant le câble et dont les extrémités dénudées sont raccordées aux différentes bornes du connecteur électrique.

De préférence, le diamètre externe de la portion cylindrique 34 est très légèrement inférieur à la distance e qui sépare les fonds des deux demi-coquilles lorsque celles-ci sont assemblées. Ainsi, la portion cylindrique 34 est maintenue sensiblement dans un même plan. La différence d'épaisseur sert à permettre la fixation du blindage sur la face externe de la partie cylindrique 34.

Comme le montre clairement la figure 2, on peut donner à l'axe de l'organe mobile 30 une angulation a par rapport à l'axe XX' du capot. Cet angle a est compris entre -35 et +35° environ.

On voit également que l'organe mobile 30 a une longueur relativement réduite par rapport à celle des deux demi-coquilles. On réserve ainsi un volume important pour constituer la chambre de câblage 22.

La figure 3 montre plus en détails un mode préféré de réalisation d'une demi-coquille. Cette figure montre en particulier un système de clipsage 60 ménagé sur le bord de chaque demi-coquille et qui permet d'obtenir l'assemblage des deux demi-coquilles du capot.

Dans la description précédente, on a envisagé le cas du montage d'un câble muni d'un blindage. Dans le cas où le câble est dépourvu de blindage, les deux demi-coquilles et l'organe mobile peuvent être réalisés en un matériau plastique isolant. La portion allongée de l'organe mobile sert alors seulement à la mise en place d'une bague de sertissage pour solidariser le câble dans l'organe mobile.

Ainsi que cela a déjà été indiqué, l'invention concerne également un capot pour un connecteur optique. Dans ce cas, le câble optique traverse le passage axial de l'organe mobile et il est fixé à cette pièce par tout moyen convenable. A son extrémité, le câble optique est raccordé globalement au connecteur optique ou bien chaque conducteur optique est raccordé individuellement à un élément de couplage du connecteur optique.

## Revendications

1. Capot pour connecteur électrique ou optique comprenant deux demi-coquilles (12, 14) solidarisables entre elles et définissant une chambre interne (22), une première extrémité (16) pour le passage d'un câble électrique (18) ou optique et une deuxième extrémité (20) de fixation sur le connecteur électrique ou optique, caractérisé en ce que, à proximité de sa première extrémité (16), la face interne de la demi-coquille comporte une portion en forme de calotte sphérique concave (26, 28), les deux calottes sphériques, lorsque les demi-coquilles sont assemblées, étant sensiblement en regard l'une de l'autre et étant disposées sensiblement sur une même sphère, et en ce qu'il comprend en outre un organe mobile (30) de passage muni d'un passage axial (36) pour le câble, ledit organe mobile comportant une première partie en forme de portion de sphère (32) et une deuxième partie de forme allongée (34), lorsque les deux demi-coquilles sont assemblées, ladite partie en forme de portion de sphère coopérant avec les calottes sphériques et la partie de forme cylindrique de l'organe mobile étant disposée à l'intérieur de ladite chambre.

2. Capot selon la revendication 1, caractérisé en ce que les deux demi-coquilles (12, 14) et l'organe mobile (30) sont réalisés en un matériau conducteur de l'électricité et le câble est un câble électrique blindé.

3. Capot selon l'une quelconque des revendications 1 et 2, caractérisé en ce que, lorsque les deux demi-coquilles (12, 14) sont assemblées, le contact entre la partie en forme de portion de sphère (32) de l'organe mobile (30) et les calottes sphériques (26, 28) est serré.

4. Capot selon l'une quelconque des revendications 1 à 3, caractérisé en ce que chaque demi-coquille (12, 14) comprend un fond (24) dans lequel est ménagée ladite calotte sphérique (26, 28) et des bords (25) munis de moyens d'assemblage (60) entre elles desdites demi-coquilles, la distance entre lesdits fonds, lorsque les deux demi-coquilles sont assemblées étant légèrement supérieure aux dimensions de la partie allongée (34) de l'organe mobile (30) pour permettre la fixation du blindage du câble sur la face externe de ladite partie allongée.

5. Capot selon la revendication 1, caractérisé en ce que ledit câble est un câble optique.
